# EUROPÄISCHE PATENTSCHRIFT

(11) **EP 2 926 102 B1**
(45) Veröffentlichungstag und Bekanntmachung des Hinweises auf die Patenterteilung: **04.03.2020**
(21) Anmeldenummer: 13773725.0
(22) Anmeldetag: 04.10.2013
(51) Int. Cl.: G01L 9/00, G01L 19/14

(54) **DRUCKSENSORMODUL**
PRESSURE SENSOR MODULE
MODULE DE CAPTEUR DE PRESSION

(30) Priorität: 03.12.2012 DE 102012222089
(43) Veröffentlichungstag der Anmeldung: 07.10.2015
(73) Patentinhaber: Robert Bosch GmbH, 70442 Stuttgart (DE)
(72) Erfinder: HABIBI, Masoud, 71701 Schwieberdingen (DE)
(86) Internationale Anmeldenummer: PCT/EP2013/070682
(87) Internationale Veröffentlichungsnummer: WO 2014/086512

(56) Entgegenhaltungen:
- EP-A2- 1 505 380
- DE-T2-602005 002 859
- DE-U1-202008 011 684
- JP-A- S58 731
- US-A1- 2006 000 288

## Beschreibung

### Stand der Technik

Die Erfindung betrifft ein Drucksensormodul mit den Merkmalen des Oberbegriffs des unabhängigen Anspruchs 1.

Ein ähnlicher Drucksensor ist beispielsweise aus der DE 103 15 405 A1 bekannt. In dieser Schrift ist beispielsweise ein Drucksensor mit einem in einem Gehäuse angeordneten Druckaufnehmer beschrieben, wobei das Gehäuse ein mit einem Druckanschlussstutzen versehenes erstes Gehäuseteil und ein mit einem Steckerteil versehenes zweites Gehäuseteil aufweist. Zwischen dem ersten Gehäuseteil und dem zweiten Gehäuseteil ist ein Verbindungsteil angeordnet, das als Stanzbiegeteil ausgebildet ist und mit dem ersten Sensorgehäuseteil einen bis auf Öffnungen zur Durchführung der elektrischen Anschlüsse geschlossenen EMV-Raum bildet. Der Druckaufnehmer ist mit einer Leiterplatte kontaktiert, die wiederum über S-förmige Verbindungselemente mit Anschlusselementen des Steckerteils verbunden ist.

Weiterhin ist aus der DE 100 14 992 A1 eine Sensoranordnung mit einer Druckmesszelle bekannt, die eine Messmembran aufweist, welche von dem druckbeaufschlagten Messmedium auslenkbar ist und eine Messbrücke aufweist. Eine Auswerteschaltung ist als Hybridschaltung ausgebildet und an der Messmembran unter Herstellung elektrischer Verbindungen zwischen der Hybridschaltung und der Messbrücke direkt befestigt. Die Kontaktierung der Hybridschaltung mit Steckerstiften eines Steckerteils der Sensoranordnung erfolgt über Federkontakte im Inneren des Sensorgehäuses.

Die US2006/0000288 A1 offenbart ein Drucksensormodul mit einem Aluminium Gehäuse und einem Zwischenträger der mittels einem Silicon-Dichtmittel am Gehäuse befestigt ist.

In der DE602005002859 T2 wird die Befestigung des Zwischenträgers mittels einer formschlüssigen Verbindung durch eine Verformung des Gehäuses am Gehäuse befestigt und mittels einer Dichtung druckdicht gemacht.

### Offenbarung der Erfindung

Es wird daher ein Drucksensormodul zur Bestimmung des Drucks eines Mediums vorgeschlagen, welches den oben dargestellten Stand der Technik in vorteilhafterweise weiterentwickelt.

Dementsprechend wird ein Drucksensormodul vorgeschlagen, welches einen Sensorchip, ein Gehäuse mit einem Druckstutzen, sowie ein Steckerteil zur elektrischen Anbindung des Drucksensormoduls umfasst. Unter einem Sensorchip ist allgemein ein Bauteil benannt, welches zur Umwandlung einer physikalischen Messgröße, wie beispielsweise des Druckes eines Mediums, in einen bevorzugt elektrischen Strom oder weiter bevorzugt eine elektrische Spannung eingesetzt werden kann. Anders ausgedrückt, erzeugt der Sensorchip in Abhängigkeit eines auf ihn ausgeübten Druckes ein entsprechendes druckabhängiges elektrisches Ausgangssignal in Form einer Spannung oder eines Stromes. Diesbezüglich ist es bei dem erfindungsgemäßen Drucksensormodul weiter vorgesehen, dass in dem Steckerteil mit dem Sensorchip elektrisch verbundene Steckkontakte vorgesehen sind, welche beispielsweise die von dem Sensorchip als Ausgangssignal bereitgestellte elektrische Spannung oder den elektrischen Strom über beispielsweise nicht zum Drucksensormodul gehörende elektrische Leitungen beispielsweise zu einem Steuergerät weiterleiten können und somit ein Auslesen des Sensorchips ermöglichen. Erfindungsgemäß ist der Sensorchip durch den Druckstutzen mit dem Messmedium beaufschlagbar, wobei der Druckstutzen zumindest teilweise aus einem Leichtmetall gefertigt ist.

Eine Fertigung wenigstens des Druckstutzens aus einem Leichtmetall bringt zunächst den Vorteil mit sich, dass hingegen zu anderen bisher verwendeten Materialien, wie beispielsweise veredelten Stählen, die Materialkosten schon bei der Beschaffung des Rohstoffs in vorteilhafter Weise verringert werden können. Ein weiterer Vorteil des vorgeschlagenen Drucksensormoduls besteht darin, dass durch die Verwendung eines Leichtmetalls weiterhin das Gewicht des Sensormoduls in vorteilhafter Weise reduziert wird.

Hierbei ist der Druckstutzen bevorzugt aus Aluminium oder Messing gefertigt. In ebenso vorteilhafter Weise ist auch eine Fertigung des Druckstutzens aus einer Aluminiumlegierung oder einer Messinglegierung oder einer anderen Leichtmetalllegierung denkbar.

Weiter lassen sich in vorteilhafter Weise bei der Herstellung des vorgeschlagenen Drucksensormoduls, insbesondere des Gehäuses und des Druckstutzens des Sensormoduls, die Kosten, insbesondere der notwendigen Formgebungsprozesse weiter reduzieren. Beispielsweise kann hierbei ein Gehäuse und/oder der Druckstutzen des Drucksensormoduls als ein Fließpressteil gefertigt werden, wenn dieser aus Aluminium gefertigt ist.

Gemäß einer weiteren Ausführungsform des vorgeschlagenen Drucksensormoduls kann es vorgesehen sein, dass das Gehäuse einen Gehäusekörper aufweist, welcher zusammen mit dem Druckstutzen einstückig aus dem Leichtmetall gefertigt ist und welcher ferner den Sensorchip aufnimmt. Der Druckstutzen ist bevorzugt dazu bestimmt, in einen das Messmedium führenden Raum eingebracht zu werden und eine Verbindung für das Messmedium innerhalb des Raumes zu dem Sensorchip, insbesondere zu unmittelbaren Beaufschlagung des Sensorchips mit dem Messmedium zu ermöglichen. Aus allgemeinen produktionstechnischen Gründen als auch hinsichtlich einer einfacheren Montage ist es bevorzugt, wenn der Druckstutzen eine rotationssymmetrische Form, wie beispielsweise die eines Hohlzylinders, aufweist. Jede beliebige andere Form ist jedoch ebenfalls denkbar.

Durch die Fertigung des Gehäuses, insbesondere des Gehäusekörpers und des Druckstutzens als einstückiges Bauteil aus dem Leichtmetall wird weiterhin der Vorteil geschaffen, dass besonders in dem das unter Druck stehenden Messmedium führenden Bereich des Gehäuses ein Aufbau aus mehreren Gehäuseteilen und den dementsprechend erforderlichen Verbindungsstellen der Gehäuseteile vermieden werden, oder bevorzugt entfallen. Insbesondere, da an derartigen Verbindungsstellen, welche mit dem druckführenden Messmedium beaufschlagt sind, besonders hohe Anforderungen an die Dichtheit gestellt werden. Folglich wird durch eine einstückige Ausbildung des Gehäusekörpers und des Druckstutzens eine Schwachstelle in Form von Verbindungsstellen und der damit einhergehenden im Falle einer Leckage auftretenden Verfälschung der Messergebnisse vermieden. Weiterhin kann es vorgesehen sein, dass auf der dem Druckstutzen abgewandten Seite des Gehäusekörpers ein Schaltungsträger vorgesehen ist, welcher beispielsweise dazu eingerichtet sein kann, die elektrische Verbindung zwischen dem Sensorchip und den Steckkontakten bereitzustellen. Weiter kann der Schaltungsträger jedoch auch vorgesehen sein, eine Auswerteelektronik bereitzustellen, welche das von dem Sensorchip generierte Ausgangssignal zunächst beispielsweise durch einen Filter und/oder einen Strom- oder Spannungsverstärker aufbereitet und ggf. weiter teilweise oder vollständig auswertet. Die Auswerteelektronik kann diesbezüglich ebenfalls dazu eingerichtet sein, das im vorherigen Sinne wenigstens teilweise ausgewertete Ausgangssignal des Sensorchips in analoger oder digitaler Form, beispielsweise zum Auslesen durch eine Sensorsteuerung, an den Steckkontakten bereitzustellen. Der Schaltungsträger kann hierzu beispielsweise durch eine bereits bekannte Leiterplatine gebildet sein, welche wenigstens eine Lage an elektrischen Schaltungen und/oder elektrischen Verbindungen aufweist.

Alternativ oder zusätzlich kann es vorgesehen sein, dass der Sensorchip ein piezoresistiver Sensorchip ist. Ein piezoresistiver Sensorchip zeichnet sich bekanntermaßen durch die Eigenschaften seines Materials aus, welche den eigenen elektrischen Widerstand in Abhängigkeit des Druckes oder Zuges, welcher auf ihn ausgeübt wird, verändert. Diese Änderung des elektrischen Widerstandes des Sensorchips lässt sich mit einer äußeren Beschaltung durch eine bekannte Strom-Spannungs-Messung oder Spannungs-Strom-Messung auf einfache und zuverlässige Weise erfassen.

Eine weitere Ausführungsform des vorgeschlagenen Drucksensormoduls weist ein Steckerteil auf, welches zumindest teilweise aus einem Kunststoff gefertigt ist. Da das Steckerteil bestimmungsgemäß nicht mit dem druckführenden Messmedium in Kontakt steht, kann es ebenfalls in vorteilhafter Weise, beispielsweise durch ein Kunststoff-Spritzgussverfahren, die Kosten weiter reduzierend als Massenprodukt hergestellt werden. Das Steckerteil dient insbesondere dazu, die zur weiteren elektrischen Verbindung vorgesehenen Steckkontakte vor mechanischer Beeinträchtigung, wie beispielsweise einem Verbiegen der einzelnen Steckkontakte zu bewahren und weiterhin einen ggf. auf die Steckkontakte aufgesteckten Stecker vor einem ungewollten Abziehen von den Steckkontakten zu hindern.

Weiterhin kann es besonders von Vorteil sein, wenn das Steckerteil verdrehgesichert und unlösbar mit dem Gehäuse verbunden ist.

Ebenfalls kann es in vorteilhafter Weise vorgesehen sein, dass das Steckerteil durch eine formschlüssige und/oder stoffschlüssige Verbindung mit dem Gehäuse verbunden ist. Hierdurch wird eine dauerhafte und stabile Verbindung zwischen dem Steckerteil und dem Gehäuse gewährleistet. Hierbei ist es weiter von Vorteil, wenn die formschlüssige Verbindung eine Klemmverbindung, insbesondere eine Bördelung, umfasst. Diese Bördelung kann beispielsweise durch eine in dem Gehäusekörper geformte Nut und eine nach dem Einstecken des Steckerteils in diese Nut erfolgtes Zusammenquetschen und/oder Verpressen der äußeren Nutkante erzeugt werden. Dies wird insbesondere durch die Verwendung eines leicht verformbaren Leichtmetalls, wie beispielsweise Aluminium, in vorteilhafter Weise begünstigt.

Im Falle einer stoffschlüssigen Verbindung des Steckerteils mit dem Gehäuse, kann es vorgesehen sein, das die stoffschlüssige Verbindung durch eine Klebeverbindung, insbesondere durch einen auf dem Gehäusekörper aufgebrachten Klebstoff, bewirkt wird. Auf diese Weise lässt sich das Steckerteil auf einfache Weise mit dem Gehäusekörper verbinden und wird nachfolgend bevorzugt dauerhaft auf diesem gehalten. In weiterhin vorteilhafter Weise kann es ebenso vorgesehen sein, dass sowohl eine formschlüssige Verbindung in Form einer Bördelung als auch eine stoffschlüssige Verbindung durch den Einsatz einer Klebeverbindung vorgenommen wird.

Gemäß einer weiteren Ausgestaltung des Drucksensormoduls wird es vorgeschlagen, dass am Gehäuse, insbesondere im Bereich des Übergangs vom Gehäusekörper zu den Druckköpfen, eine Dichtung, bevorzugt eine Ringdichtung, vorgesehen ist. Die Dichtung kann hierbei beispielsweise in Form einer profilierten Gummilippe oder aber eines O-Rings aus Gummi bestehen. Denkbar ist jedoch auch eine Dichtung durch einen profilierten Messingring, welcher sich beim Einziehen des Drucksensormoduls gegenüber der Gehäusewand, in welches das Drucksensormodul eingeschraubt wird, verstemmt und durch Verformung eine Dichtwirkung herbeiführt. Zusätzlich kann, zur weiteren Verbesserung der Dichtheit, eine filmartige Dichtung auf dem Außengewinde 34 angeordnet sein.

Erfindungsgemäß ist es vorgesehen, dass der Sensorchip des Druckmoduls von einem Zwischenträger gehalten ist, wobei der Zwischenträger durch eine formschlüssige und eine stoffschlüssige Verbindung mit dem Gehäuse verbunden ist. Der Zwischenträger ist bevorzugt aus einer Eisen-Nickel-Cobalt-Legierung oder einem vergleichbaren Material gefertigt, welche einen geringen Wärmeausdehnungskoeffizient ausweist. Abermals bevorzugt kann es sich hierbei um einen KOVAR®-Träger handeln. Hierbei ist es weiter von Vorteil, wenn die formschlüssige Verbindung zwischen dem Zwischenträger und dem Gehäuse eine Klemmverbindung umfasst, wobei die Klemmverbindung durch eine Verformung des Gehäusematerials, beispielsweise durch eine Krimpung oder Bördelung, erzeugt ist. Hierbei ist es möglich, dass das verformte Gehäusematerial unter Bildung eines Vorsprungs mit einer möglicherweise an dem Zwischenträger vorgesehen Kante zur Bildung der Klemmwirkung zusammenwirkt. Hierbei kommt dem Einsatz und der Erzeugung einer Klemmverbindung abermals die Verwendung von beispielsweise Aluminium oder Messing als Material des Gehäuses, insbesondere des Gehäusekörpers zugute. Ferner werden hierdurch aufwändige Schweißprozesse vermieden.

Erfindungsgemäß ist es vorgesehen, dass die formflüssige und die stoffschlüssige Verbindung zwischen dem Zwischenträger und dem Gehäuse druckdicht ist. Dies ist insbesondere deshalb von Vorteil, da ein Ausweichen des druckführenden Messmediums aus dem Druckstutzen oder dem Gehäusekörper in einen Bereich des Gehäuses mit Umgebungsdruck den Druck im Inneren des Druckstutzens verringern würde und somit das Messergebnis unbeabsichtigt verfälschen würde. Ferner kann durch Leckage des Messmediums in den Bereich des Gehäuses mit Umgebungsdruck der Sensor durch Korrosionen ausfallen.

### Kurze Beschreibung der Zeichnungen

Eine bevorzugte Ausführungsform eines erfindungsgemäßen Drucksensormoduls ist in der Zeichnung dargestellt und wird in der nachfolgenden Beschreibung näher erläutert. Es zeigt:

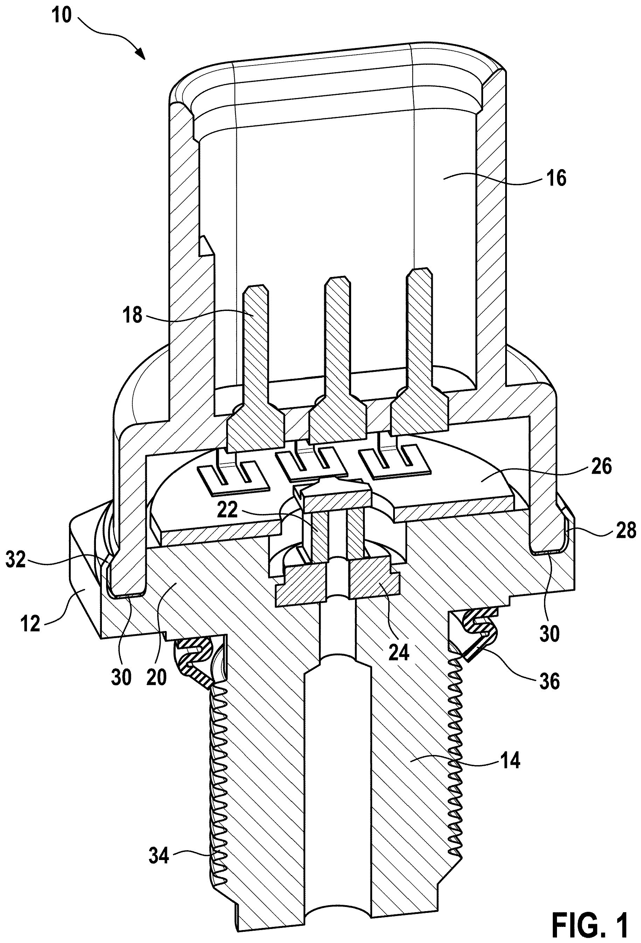

- Fig. 1: Ein Ausführungsbeispiel des erfindungsgemäßen Drucksensormoduls mit einem Druckstutzen auf einem Leichtmetall.

### Ausführungsformen der Erfindung

Fig. 1 zeigt ein Drucksensormodul 10 zur Bestimmung des Druckes eines Messmediums, umfassend ein Gehäuse 12 mit einem Druckstutzen 14 und weiter umfassend ein Steckerteil 16. Innerhalb des Steckerteils 16 sind, wie in Figur 1 dargestellt, drei Steckkontakte zur elektrischen Anbindung des Drucksensormoduls an beispielsweise ein nicht dargestelltes Steuergerät oder einen ebenfalls nicht gezeigten Datenbus. Die Anzahl der vorgesehenen Steckkontakte kann im Einzelfall jedoch insbesondere von der dargestellten Ausführung variieren. Das Gehäuse 12 weist einen Gehäusekörper 20 auf, welcher bevorzugt mit einem Außenprofil in Form eines Sechskants versehen ist. Von der dem Steckerteil 16 abgewandten Seite des Gehäusekörpers 20 geht der Druckstutzen 14 ab. Des Weiteren ist der Darstellung von Figur 1 zu entnehmen, dass innerhalb des Gehäusekörpers 20 ein Sensorchip 22 durch einen Zwischenträger 24 in dem Gehäusekörper 20 gehalten ist. Wie ferner dargestellt ist, weist der Druckstutzen 14, der Zwischenträger 24 als auch der Sensorchip 22 einen Hohlraum, bevorzugt in Form einer durchgängigen Bohrung auf, welcher es dem druckführenden Medium ermöglicht, durch den Druckstutzen 14 und den Zwischenträger 24 hindurch bis zu dem Sensorchip 22 zu gelangen. Der Zwischentäger 24 ist bevorzugt in einer nicht näher bezeichneten Vertiefung innerhalb des Gehäusekörpers 20 angeordnet und durch eine Klemmverbindung gehalten. Die Klemmverbindung wird unter Bildung eines Vorsprungs bevorzugt durch eine Verformung des Gehäusematerials des Gehäusekörpers in einem Randbereich der Vertiefung erzeugt.

Auf der dem Druckstutzen 14 gegenüberliegenden Seite des Gehäusekörpers 20 ist weiterhin ein Schaltungsträger 26 angeordnet, welcher elektrisch leitend mit dem Sensorchip 22, z.B. durch Bonddrähte, verbunden ist und welches ein Auswerten des Sensorchips 22 ermöglicht. Der Schaltungsträger kann Komponenten, wie z.B. Kondensatoren, zur Verbesserung der EMV (Elektro Magnetische Verträglichkeit) enthalten. Des Weiteren steht der Schaltungsträger 26 bevorzugt mit den Steckkontakten 18 elektrisch leitend in Verbindung. Das Steckerteil 16 ist bevorzugt - wie dargestellt - in eine Nut 28 innerhalb des Gehäusekörpers 20 eingefügt und einerseits durch eine innerhalb der Nut angeordnete Schicht aus Klebstoff 30, als auch durch eine im Bereich der äußeren Umfangsfläche der Nut 28 erzeugten Klemmverbindung 32 gehalten. Durch die Klebeverbindung 30 und die Klemmverbindung 32 wird bevorzugt eine dauerhafte und unlösbare Verbindung zwischen dem Steckerteil 16 und dem Gehäusekörper 20 geschaffen, welche zudem das Steckerteil 16 gegen ein unerwünschtes Verdrehen relativ zum Gehäusekörper 20 schützt.

Des Weiteren ist der Darstellung von Figur 1 zu entnehmen, dass die bevorzugte Ausführungsform des Drucksensormoduls einen bevorzugten rotationssymmetrischen Druckstutzen 14 aufweist, an welchem umfangflächig ein Außengewinde 34 geformt ist, um das Drucksensormodul bevorzugt in ein entsprechendes Innengewinde einschrauben zu können, welches beispielsweise in der Wand eines das Messmedium führenden Rohres vorgesehen ist. Damit die Dichtheit dieses nicht dargestellten Rohres im Bereich der beschriebenen Durchtrittsöffnung mit dem Innengewinde mit dem Druckstutzen 14 weiter gewährleistet bleibt, weist die bevorzugte Ausführungsform des Drucksensormoduls 10 im Bereich des Übergangs von dem Druckstutzen 14 zu dem Gehäusekörper 20 eine Dichtung 36 auf, welche die nicht dargestellte Durchtrittsöffnung nach dem Einschrauben des Drucksensormoduls 10 druckdicht abdichtet. Zusätzlich kann, zur weiteren Verbesserung der Dichtheit, eine filmartige Dichtung auf dem Außengewinde 34 angeordnet sein.

## Patentansprüche

1. Drucksensormodul (10) zur Bestimmung des Drucks eines Messmediums, umfassend einen Sensorchip (22), ein Gehäuse (12) mit einem Druckstutzen (14), sowie ein Steckerteil (16) zur elektrischen Anbindung des Drucksensormoduls (10), wobei in dem Steckerteil (16) mit dem Sensorchip (22) elektrisch verbundene Steckkontakte (18) vorgesehen sind, wobei der Sensorchip (22) durch den Druckstutzen (14) mit dem Messmedium beaufschlagbar ist,
wobei der Druckstutzen (14) zumindest teilweise aus einem Leichtmetall gefertigt ist, wobei der Sensorchip (22) von einem Zwischenträger (24) gehalten ist, **dadurch gekennzeichnet dass**, der Zwischenträger (24) durch eine formschlüssige und stoffschlüssige Verbindung mit dem Gehäuse (12) verbunden ist, wobei die formschlüssige Verbindung eine Klemmverbindung umfasst, wobei die Klemmverbindung durch eine Verformung des Gehäusematerials erzeugt ist, wobei die Verbindung zwischen dem Zwischenträger (24) und dem Gehäuse (12) druckdicht ist.

2. Drucksensormodul (10) nach dem vorhergehenden Anspruch, wobei der Druckstutzen (14) aus Aluminium oder einer Aluminium-Legierung gefertigt ist.

3. Drucksensormodul (10) nach einem der vorhergehenden Ansprüche, wobei das Gehäuse (12) einen Gehäusekörper (20) aufweist, wobei der Gehäusekörper (20) und der Druckstutzen (14) einstückig aus dem Leichtmetall gefertigt sind, wobei der Gehäusekörper (20) den Sensorchip (22) aufnimmt.

4. Drucksensormodul (10) nach dem vorhergehenden Anspruch, wobei auf der dem Druckstutzen (14) abgewandten Seite des Gehäusekörpers (20) ein Schaltungsträger (26) vorgesehen ist.

5. Drucksensormodul (10) nach einem der vorhergehenden Ansprüche, wobei der Sensorchip (22) ein piezoresistiver Sensorchip (22) ist.

6. Drucksensormodul (10) nach einem der vorhergehenden Ansprüche, wobei das Steckerteil (16) zumindest teilweise aus einem Kunststoff gefertigt ist.

7. Drucksensormodul (10) nach einem der vorhergehenden Ansprüche, wobei das Steckerteil (16) verdrehgesichert und unlösbar mit dem Gehäuse verbunden ist.

8. Drucksensormodul (10) nach einem der vorhergehenden Ansprüche, wobei das Steckerteil (16) durch eine formschlüssige und/oder stoffschlüssige Verbindung mit dem Gehäuse (12) verbunden ist.

9. Drucksensormodul (10) nach einem der vorhergehenden Ansprüche, wobei am Gehäuse (12) eine Dichtung (36) vorgesehen ist.

## Claims

1. Pressure sensor module (10) for determining the pressure of a measurement medium, comprising a sensor chip (22), a housing (12) with a pressure nozzle (14), and a plug part (16) for electrically connecting the pressure sensor module (10), wherein plug-in contacts (18) which are electrically connected to the sensor chip (22) are provided in the plug part (16), wherein the measurement medium can be applied to the sensor chip (22) by the pressure nozzle (14), wherein the pressure nozzle (14) is at least partially manufactured from a light metal, wherein the sensor chip (22) is held by an intermediate carrier (24), **characterized in that** the intermediate carrier (24) is connected to the housing (12) by an interlocking and cohesive connection, wherein the interlocking connection comprises a clamping connection, wherein the clamping connection is produced by a deformation of the housing material, wherein the connection between the intermediate carrier (24) and the housing (12) is pressure-tight.

2. Pressure sensor module (10) according to the preceding claim, wherein the pressure nozzle (14) is manufactured from aluminium or an aluminium alloy.

3. Pressure sensor module (10) according to either of the preceding claims, wherein the housing (12) has a housing body (20), wherein the housing body (20) and the pressure nozzle (14) are manufactured in one piece from the light metal, wherein the housing body (20) accommodates the sensor chip (22).

4. Pressure sensor module (10) according to the preceding claim, wherein a circuit carrier (26) is provided on that side of the housing body (20) that is averted from the pressure nozzle (14).

5. Pressure sensor module (10) according to one of the preceding claims, wherein the sensor chip (22) is a piezoresistive sensor chip (22).

6. Pressure sensor module (10) according to one of the preceding claims, wherein the plug part (16) is at least partially manufactured from a plastic.

7. Pressure sensor module (10) according to one of the preceding claims, wherein the plug part (16) is connected to the housing in a rotationally secured and non-releasable manner.

8. Pressure sensor module (10) according to one of the preceding claims, wherein the plug part (16) is connected to the housing (12) by an interlocking and/or cohesive connection.

9. Pressure sensor module (10) according to one of the preceding claims, wherein a seal (36) is provided on the housing (12).

## Revendications

1. Module capteur de pression (10) destiné à déterminer la pression d'un milieu de mesure, comprenant une puce de capteur (22), un boîtier (12) muni d'un manchon de pression (14), ainsi qu'une partie d'enfichage (16) destinée à raccorder électriquement le module capteur de pression (10), des contacts à enfichage (18) reliés électriquement à la puce de capteur (22) se trouvant dans la partie d'enfichage (16), la puce de capteur (22) pouvant être exposée au milieu de mesure à travers le manchon de pression (14),
le manchon de pression (14) étant au moins partiellement fabriqué dans un métal léger,
la puce de capteur (22) étant maintenue par un élément porteur intermédiaire (24), **caractérisé en ce que** l'élément porteur intermédiaire (24) est relié au boîtier (12) par une liaison par complémentarité de formes et par fusion de matières, la liaison par complémentarité de formes comprenant une liaison par serrage, la liaison par serrage étant produite par une déformation du matériau du boîtier, la liaison entre l'élément porteur intermédiaire (24) et le boîtier (12) étant étanche à la pression.

2. Module capteur de pression (10) selon la revendication précédente, le manchon de pression (14) étant fabriqué en aluminium ou un alliage d'aluminium.

3. Module capteur de pression (10) selon l'une des revendications précédentes, le boîtier (12) possédant un corps de boîtier (20), le corps de boîtier (20) et le manchon de pression (14) étant fabriqués d'un seul tenant dans le métal léger, le corps de boîtier (20) accueillant la puce de capteur (22).

4. Module capteur de pression (10) selon la revendication précédente, un porte-circuit (26) se trouvant sur le côté du corps de boîtier (20) à l'opposé du manchon de pression (24).

5. Module capteur de pression (10) selon l'une des revendications précédentes, la puce de capteur (22) étant une puce de capteur (22) piézorésistive.

6. Module capteur de pression (10) selon l'une des revendications précédentes, la partie d'enfichage (16) étant au moins partiellement fabriquée en une matière plastique.

7. Module capteur de pression (10) selon l'une des revendications précédentes, la partie d'enfichage (16) étant reliée au boîtier bloquée en torsion et de manière imperdable.

8. Module capteur de pression (10) selon l'une des revendications précédentes, la partie d'enfichage (16) étant reliée au boîtier (12) par une liaison par complémentarité de formes et/ou par fusion de matières.

9. Module capteur de pression (10) selon l'une des revendications précédentes, une garniture d'étanchéité (36) se trouvant sur le boîtier (12).
